(19)

Europäisches
Patentamt
European
Patent Office
Office européen
des brevets

(11) **EP 4 111 239 B1**

(12) **EUROPEAN PATENT SPECIFICATION**

(45) Date of publication and mention
of the grant of the patent:
**18.02.2026 Bulletin 2026/08**

(21) Application number: **21759876.2**

(22) Date of filing: **01.03.2021**

(51) International Patent Classification (IPC):
**G01V 1/28** (2006.01)     **G01V 1/30** (2006.01)
**G06F 17/40** (2006.01)

(52) Cooperative Patent Classification (CPC):
**G01V 1/282; G01V 1/305;** G01V 2210/614;
G01V 2210/67; G06F 17/40

(86) International application number:
**PCT/US2021/020183**

(87) International publication number:
**WO 2021/174178 (02.09.2021 Gazette 2021/35)**

(54) **FULL-WAVEFORM INVERSION USING TEMPLATE MATCHING**

VOLLWELLENFORMINVERSION UNTER VERWENDUNG VON SCHABLONENABGLEICH

INVERSION DE FORME D'ONDE COMPLÈTE UTILISANT CORRESPONDANCE DE GABARIT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **27.02.2020 US 202062982318 P**

(43) Date of publication of application:
**04.01.2023 Bulletin 2023/01**

(73) Proprietors:
• **Services Pétroliers Schlumberger
75007 Paris (FR)**
Designated Contracting States:
**FR**
• **GeoQuest Systems B.V.
2586 BJ The Hague (NL)**
Designated Contracting States:
**AL AT BE BG CH CY CZ DE DK EE ES FI GB GR
HR HU IE IS IT LI LT LU LV MC MK MT NL NO PL
PT RO RS SE SI SK SM TR**

(72) Inventors:
• **CHENG, Xin
Houston, Texas 77042 (US)**
• **JIAO, Kun
Houston, Texas 77042 (US)**
• **XU, Zhen
Houston, Texas 77042 (US)**

• **VIGH, Denes
Houston, Texas 77042 (US)**

(74) Representative: **Schlumberger Intellectual
Property Department
Parkstraat 83
2514 JG Den Haag (NL)**

(56) References cited:
WO-A2-2013/032573     US-A- 5 706 194
US-A- 5 889 729     US-A1- 2009 292 475
US-A1- 2010 161 230     US-A1- 2011 264 421
US-A1- 2016 320 505     US-A1- 2017 242 142
US-A1- 2017 285 193     US-A1- 2019 302 293

• VIGH DENES ET AL: "Is the salt-related full-
waveform inversion sorted out?", SEG
TECHNICAL PROGRAM EXPANDED
ABSTRACTS 2019, 10 August 2019 (2019-08-10),
pages 1265 - 1269, XP093117223, DOI: 10.1190/
segam2019-3215741.1
• VIGH DENES ET AL: "The impact of acquisition
geometry on full-waveform inversion updates",
vol. 40, no. 5, 1 May 2021 (2021-05-01), US, pages
335 - 341, XP093117534, ISSN: 1070-485X,
Retrieved from the Internet <URL:https://dx.doi.
org/10.1190/tle40050335.1> [retrieved on
20240109], DOI: 10.1190/tle40050335.1

## Description

### Cross-Reference to Related Applications

This application claims priority to U.S. Provisional Patent Application having serial no. 62/982,318, which was filed on February 27, 2020.

### Background

In the field of seismology, seismic signals that propagate through a subterranean domain are recorded using receivers. The structure, geology, and other characteristics of the subterranean domain may then be inferred from these signals, in a process known as inversion. Full-waveform inversion (FWI) is a type of inversion that uses the entire content of seismic traces for extracting physical parameters of the medium sampled by seismic waves.

Deriving a robust objective function for full-waveform inversion (FWI) in complex geology can present a challenge. The FWI is often based on a least-squares objective function, which breaks down when cycle-skipping occurs, i.e., when the simulated data differs from the observed data by more than half a cycle. One way to avoid cycle skipping is to start the inversion at a lower frequency or with an accurate enough initial model. However, frequently neither of those options are available due to the scope of the acquired data and maturity of the study area.

Other objective functions have been proposed to mitigate cycle skipping. One such option is a traveltime-based objective function. This objective function focuses on a kinematic oriented misfit to mitigate the impact of amplitude complexity between the simulated data and the observed data. The success for such approach relies on a reliable measurement of the time shift for similar events between the simulated data and the observed data. However, this technique relies on the existence of similar events in both simulated data and observed data, which limits the application of those traveltime objective-function-based approaches.

Another possibility for use is the optimal transport (OT) method. This method uses the optimal transport distance or Wasserstein distance metric to describe the minimal transformation required to map the simulated data to the observed data. The OT distance has a convex property that may overcome cycle-skipping problem for FWI. While it appears to be a viable way of comparing seismograms sample-by-sample, it suffers from technical and practical challenges, as it relies upon the positivity for the compared quantities, the conservation of mass during transformation, and takes hundreds or thousands of iterations to converge. US 5,706,194 A discloses a method for modelling subterranean formations using synthetic seismograms, and involving a comparison of seismic and model traces.

### Summary

In a first aspect, the invention provides a method for seismic processing according to claim 1. The method includes receiving measured seismic data collected by recording seismic waves that propagate through a subterranean domain, simulating synthetic seismic data using a model of the subterranean domain, generating a first time-space panel including the measured seismic data and a second time-space panel including the synthetic seismic data, applying a first moving window to the first time-space panel and a second moving window to the second time-space panel, determining a misfit by comparing the measured seismic data in the first moving window with the synthetic seismic data in the second moving window, and adjusting the model based on the misfit.

In a second aspect, the invention provides a non-transitory, computer-readable medium according to claim 7 storing instructions that, when executed by at least one processor of a computing system, cause the computing system to perform operations. The operations include receiving measured seismic data collected by recording seismic waves that propagate through a subterranean domain, simulating synthetic seismic data using a model of the subterranean domain, generating a first time-space panel including the measured seismic data and a second time-space panel including the synthetic seismic data, applying a first moving window to the first time-space panel and a second moving window to the second time-space panel, determining a misfit by comparing the measured seismic data in the first moving window with the synthetic seismic data in the second moving window, and adjusting the model based on the misfit.

In a third aspect, the invention provides a computing system according to claim 8 including one or more processors, and a memory system including one or more non-transitory computer-readable media storing instructions that, when executed by at least one of the one or more processors, cause the computing system to perform operations. The operations include receiving measured seismic data collected by recording seismic waves that propagate through a subterranean domain, simulating synthetic seismic data using a model of the subterranean domain, generating a first time-space panel including the measured seismic data and a second time-space panel including the synthetic seismic data, applying a first moving window to the first time-space panel and a second moving window to the second time-space panel, determining a misfit by comparing the measured seismic data in the first moving window with the synthetic seismic data in the second moving window, and adjusting the model based on the misfit.

Thus, the computing systems and methods disclosed herein are more effective methods for processing collected data that may, for example, correspond to a surface and a subsurface region. These computing systems and methods increase data processing effectiveness, efficiency, and accuracy. Such methods and computing systems may complement or replace conventional methods for processing collected data. This summary is provided to introduce a selection of concepts that are further described below in the detailed description. This summary is not intended to identify key or essential features of the claimed subject matter, nor is it intended to be used as an aid in limiting the scope of the claimed subject matter.

**Brief Description of the Drawings**

The accompanying drawings, which are incorporated in and constitute a part of this specification, illustrate embodiments of the present teachings and together with the description, serve to explain the principles of the present teachings. In the figures:

Figures 1A, 1B, 1C, 1D, 2, 3A, and 3B illustrate simplified, schematic views of an oilfield and its operation, according to an embodiment.
Figure 4 illustrates a flowchart of a method for seismic processing, e.g., performing full waveform inversion using a template-matching objective function, according to an embodiment.
Figure 5 illustrates a time-space panel of measured (observed) seismic data and synthetic (simulated) seismic data, according to an embodiment.
Figures 6A-6D illustrate a complex shift of the top of salt reflection events resulting from the uncertainty of the top of the salt location, according to an embodiment.
Figure 7A illustrates an initial model of a salt body interpretation, according to an embodiment.
Figure 7B illustrates a model generated using the enhanced template matching full-waveform inversion output model, according to an embodiment.
Figure 7C illustrates a true model of the subterranean domain for comparison to Figures 7A and 7B, according to an embodiment.
Figure 8 illustrates a schematic view of a computing system, according to an embodiment.

**Description of Embodiments**

In general, embodiments of the present disclosure may provide seismic signal processing and imaging methods that employ an enhanced template-matching objective function to mitigate cycle skipping. To derive the enhanced template-matching objective function, acquired seismic data and modeled synthetic data may be sorted in individual cable directions to form a set of 2D time and space panel (as will be described herein, three-dimensional panels are also an option). Within each time and space panel, a running window time-space template matching method may be used to measure the similarity and the time-space-shift between the simulated data and the observed data. Further, the template-matching objective function may implement a least-squares-based objective function term to form the misfit at regions where no or minimal similarity between the simulated data and the observed data exist. Such methods may improve the reliability of the traveltime shift measurements to a more robust time-space-shift in two dimensions.

Further, the methods may allow for processing even in regions of the panel where similar events do not exist in both simulated data and observed data in order to derive a meaningful model updates. The updated model may be used to generate models of the subsurface volume from which the seismic data is collected. It will be appreciated that improving the accuracy and/or efficiency of these models, as discussed herein, is applied in a variety of industries concerned with characterizing the subsurface domain and, e.g., planning well locations and trajectories (among other things).

Reference will now be made in detail to several specific embodiments, which are illustrated in the accompanying drawings and figures. In the following detailed description, numerous specific details are set forth in order to provide a thorough understanding of the invention. However, it will be apparent to one of ordinary skill in the art that the invention may be practiced without these specific details. In other instances, well-known methods, procedures, components, circuits and networks have not been described in detail so as not to unnecessarily obscure aspects of the embodiments.

It will also be understood that, although the terms first, second, etc. may be used herein to describe various elements, these elements should not be limited by these terms. These terms are only used to distinguish one element from another. For example, a first object could be termed a second object, and, similarly, a second object could be termed a first object, without departing from the scope of the invention. The first object and the second object are both objects, respectively, but they are not to be considered the same object.

The terminology used in the description of the invention herein is for the purpose of describing particular embodiments only and is not intended to be limiting of the invention. As used in the description of the invention and the appended claims, the singular forms "a," "an" and "the" are intended to include the plural forms as well, unless the context clearly indicates otherwise. It will also be understood that the term "and/or" as used herein refers to and encompasses any possible combinations of one or more of the associated listed items. It will be further understood that the terms "includes," "including," "comprises" and/or "comprising," when used in this specification, specify the presence of stated features, integers, steps, operations, elements, and/or components, but do not preclude the presence or addition of one or more other features, integers, steps, operations, elements, components, and/or groups thereof. Further, as used herein, the term "if" may be construed to mean "when" or "upon" or "in response to determining" or "in response to detecting," depending on the context.

Attention is now directed to processing procedures, methods, techniques and workflows that are in accordance with some embodiments. Some operations in the processing procedures, methods, techniques and workflows disclosed herein may be combined and/or the order of some operations may be changed.

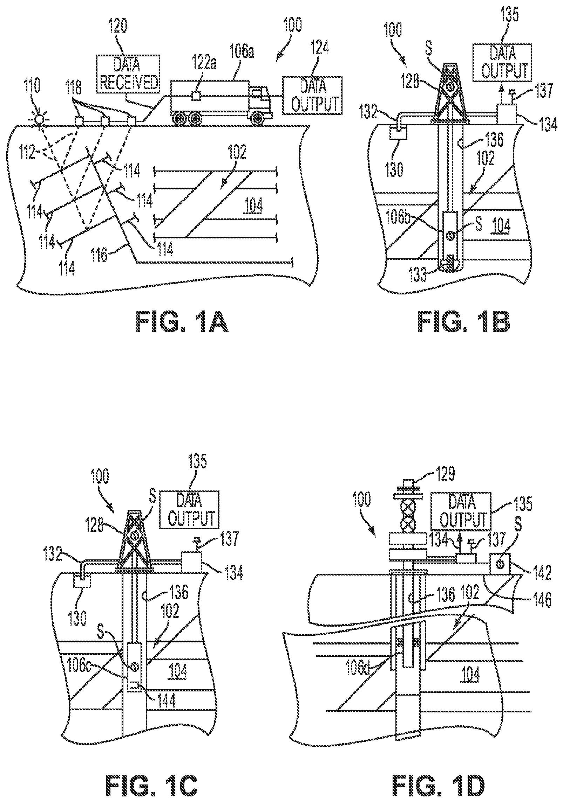

Figures 1A-1D illustrate simplified, schematic views of oilfield 100 having subterranean formation 102 containing reservoir 104 therein in accordance with implementations of various technologies and techniques described herein. Figure 1A illustrates a survey operation being performed by a survey tool, such as seismic truck 106a, to measure properties of the subterranean formation. The survey operation is a seismic survey operation for producing sound vibrations. In Figure 1A, one such sound vibration, e.g., sound vibration 112 generated by source 110, reflects off horizons 114 in earth formation 116. A set of sound vibrations is received by sensors, such as geophone-receivers 118, situated on the earth's surface. The data received 120 is provided as input data to a computer 122a of a seismic truck 106a, and responsive to the input data, computer 122a generates seismic data output 124. This seismic data output may be stored, transmitted or further processed as desired, for example, by data reduction.

Figure 1B illustrates a drilling operation being performed by drilling tools 106b suspended by rig 128 and advanced into subterranean formations 102 to form wellbore 136. Mud pit 130 is used to draw drilling mud into the drilling tools via flow line 132 for circulating drilling mud down through the drilling tools, then up wellbore 136 and back to the surface. The drilling mud is typically filtered and returned to the mud pit. A circulating system may be used for storing, controlling, or filtering the flowing drilling mud. The drilling tools are advanced into subterranean formations 102 to reach reservoir 104. Each well may target one or more reservoirs. The drilling tools are adapted for measuring downhole properties using logging while drilling tools. The logging while drilling tools may also be adapted for taking core sample 133 as shown.

Computer facilities may be positioned at various locations about the oilfield 100 (e.g., the surface unit 134) and/or at remote locations. Surface unit 134 may be used to communicate with the drilling tools and/or offsite operations, as well as with other surface or downhole sensors. Surface unit 134 is capable of communicating with the drilling tools to send commands to the drilling tools, and to receive data therefrom. Surface unit 134 may also collect data generated during the drilling operation and produce data output 135, which may then be stored or transmitted.

Sensors (S), such as gauges, may be positioned about oilfield 100 to collect data relating to various oilfield operations as described previously. As shown, sensor (S) is positioned in one or more locations in the drilling tools and/or at rig 128 to measure drilling parameters, such as weight on bit, torque on bit, pressures, temperatures, flow rates, compositions, rotary speed, and/or other parameters of the field operation. Sensors (S) may also be positioned in one or more locations in the circulating system.

Drilling tools 106b may include a bottom hole assembly (BHA) (not shown), generally referenced, near the drill bit (e.g., within several drill collar lengths from the drill bit). The bottom hole assembly includes capabilities for measuring, processing, and storing information, as well as communicating with surface unit 134. The bottom hole assembly further includes drill collars for performing various other measurement functions.

The bottom hole assembly may include a communication subassembly that communicates with surface unit 134. The communication subassembly is adapted to send signals to and receive signals from the surface using a communications channel such as mud pulse telemetry, electro-magnetic telemetry, or wired drill pipe communications. The communication subassembly may include, for example, a transmitter that generates a signal, such as an acoustic or electromagnetic signal, which is representative of the measured drilling parameters. It will be appreciated by one of skill in the art that a variety of telemetry systems may be employed, such as wired drill pipe, electromagnetic or other known telemetry systems.

Typically, the wellbore is drilled according to a drilling plan that is established prior to drilling. The drilling plan typically sets forth equipment, pressures, trajectories and/or other parameters that define the drilling process for the wellsite. The drilling operation may then be performed according to the drilling plan. However, as information is gathered, the drilling operation may need to deviate from the drilling plan. Additionally, as drilling or other operations are performed, the subsurface conditions may change. The earth model may also need adjustment as new information is collected.

The data gathered by sensors (S) may be collected by surface unit 134 and/or other data collection sources for analysis or other processing. The data collected by sensors (S) may be used alone or in combination with other data. The data may be collected in one or more databases and/or transmitted on or offsite. The data may be historical data, real time data, or combinations thereof. The real time data may be used in real time, or stored for later use. The data may also be combined with historical data or other inputs for further analysis. The data may be stored in separate databases, or combined into a single database.

Surface unit 134 may include transceiver 137 to allow communications between surface unit 134 and various portions of the oilfield 100 or other locations. Surface unit 134 may also be provided with or functionally connected to one or more controllers (not shown) for actuating mechanisms at oilfield 100. Surface unit 134 may then send command signals to oilfield 100 in response to data received. Surface unit 134 may receive commands via transceiver 137 or may itself execute commands to the controller. A processor may be provided to analyze the data (locally or remotely), make the decisions and/or actuate the controller. In this manner, oilfield 100 may be selectively adjusted based on the data collected. This technique may be used to optimize (or improve) portions of the field operation, such as controlling drilling, weight on bit, pump rates, or other parameters. These adjustments may be made automatically based on computer protocol, and/or manually by an operator. In some cases, well plans may be adjusted to select optimum (or improved) operating conditions, or to avoid problems.

Figure 1C illustrates a wireline operation being performed by wireline tool 106c suspended by rig 128 and into wellbore 136 of Figure 1B. Wireline tool 106c is adapted for deployment into wellbore 136 for generating well logs, performing downhole tests and/or collecting samples. Wireline tool 106c may be used to provide another method and apparatus for performing a seismic survey operation. Wireline tool 106c may, for example, have an explosive, radioactive, electrical, or acoustic energy source 144 that sends and/or receives electrical signals to surrounding subterranean formations 102 and fluids therein.

Wireline tool 106c may be operatively connected to, for example, geophones 118 and a computer 122a of a seismic truck 106a of Figure 1A. Wireline tool 106c may also provide data to surface unit 134. Surface unit 134 may collect data generated during the wireline operation and may produce data output 135 that may be stored or transmitted. Wireline tool 106c may be positioned at various depths in the wellbore 136 to provide a survey or other information relating to the subterranean formation 102.

Sensors (S), such as gauges, may be positioned about oilfield 100 to collect data relating to various field operations as described previously. As shown, sensor S is positioned in wireline tool 106c to measure downhole parameters which relate to, for example porosity, permeability, fluid composition and/or other parameters of the field operation.

Figure 1D illustrates a production operation being performed by production tool 106d deployed from a production unit or Christmas tree 129 and into completed wellbore 136 for drawing fluid from the downhole reservoirs into surface facilities 142. The fluid flows from reservoir 104 through perforations in the casing (not shown) and into production tool 106d in wellbore 136 and to surface facilities 142 via gathering network 146.

Sensors (S), such as gauges, may be positioned about oilfield 100 to collect data relating to various field operations as described previously. As shown, the sensor (S) may be positioned in production tool 106d or associated equipment, such as Christmas tree 129, gathering network 146, surface facility 142, and/or the production facility, to measure fluid parameters, such as fluid composition, flow rates, pressures, temperatures, and/or other parameters of the production operation.

Production may also include injection wells for added recovery. One or more gathering facilities may be operatively connected to one or more of the wellsites for selectively collecting downhole fluids from the wellsite(s).

While Figures 1B-1D illustrate tools used to measure properties of an oilfield, it will be appreciated that the tools may be used in connection with non-oilfield operations, such as gas fields, mines, aquifers, storage or other subterranean facilities. Also, while certain data acquisition tools are depicted, it will be appreciated that various measurement tools capable of sensing parameters, such as seismic two-way travel time, density, resistivity, production rate, etc., of the subterranean formation and/or its geological formations may be used. Various sensors (S) may be located at various positions along the wellbore and/or the monitoring tools to collect and/or monitor the desired data. Other sources of data may also be provided from offsite locations.

The field configurations of Figures 1A-1D are intended to provide a brief description of an example of a field usable with oilfield application frameworks. Part of, or the entirety, of oilfield 100 may be on land, water and/or sea. Also, while a single field measured at a single location is depicted, oilfield applications may be utilized with any combination of one or more oilfields, one or more processing facilities and one or more wellsites.

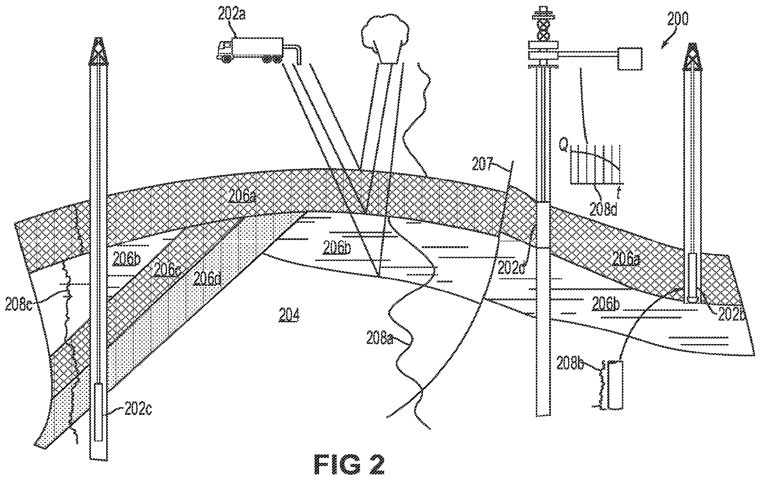

Figure 2 illustrates a schematic view, partially in cross section of oilfield 200 having data acquisition tools 202a, 202b, 202c and 202d positioned at various locations along oilfield 200 for collecting data of subterranean formation 204 in accordance with implementations of various technologies and techniques described herein. Data acquisition tools 202a-202d may be the same as data acquisition tools 106a-106d of Figures 1A-1D, respectively, or others not depicted. As shown, data acquisition tools 202a-202d generate data plots or measurements 208a-208d, respectively. These data plots are depicted along oilfield 200 to demonstrate the data generated by the various operations.

Data plots 208a-208c are examples of static data plots that may be generated by data acquisition tools 202a-202c, respectively; however, it should be understood that data plots 208a-208c may also be data plots that are updated in real time. These measurements may be analyzed to better define the properties of the formation(s) and/or determine the accuracy of the measurements and/or for checking for errors. The plots of each of the respective measurements may be aligned and scaled for comparison and verification of the properties.

Static data plot 208a is a seismic two-way response over a period of time. Static plot 208b is core sample data measured from a core sample of the formation 204. The core sample may be used to provide data, such as a graph of the density, porosity, permeability, or some other physical property of the core sample over the length of the core. Tests for density and viscosity may be performed on the fluids in the core at varying pressures and temperatures. Static data plot 208c is a logging trace that typically provides a resistivity or other measurement of the formation at various depths.

A production decline curve or graph 208d is a dynamic data plot of the fluid flow rate over time. The production decline curve typically provides the production rate as a function of time. As the fluid flows through the wellbore, measurements are taken of fluid properties, such as flow rates, pressures, composition, etc.

Other data may also be collected, such as historical data, user inputs, economic information, and/or other measurement data and other parameters of interest. As described below, the static and dynamic measurements may be analyzed and used to generate models of the subterranean formation to determine characteristics thereof. Similar measurements may also be used to measure changes in formation aspects over time.

The subterranean structure 204 has a plurality of geological formations 206a-206d. As shown, this structure has several formations or layers, including a shale layer 206a, a carbonate layer 206b, a shale layer 206c and a sand layer 206d. A fault 207 extends through the shale layer 206a and the carbonate layer 206b. The static data acquisition tools are adapted to take measurements and detect characteristics of the formations.

While a specific subterranean formation with specific geological structures is depicted, it will be appreciated that oilfield 200 may contain a variety of geological structures and/or formations, sometimes having extreme complexity. In some locations, typically below the water line, fluid may occupy pore spaces of the formations. Each of the measurement devices may be used to measure properties of the formations and/or its geological features. While each acquisition tool is shown as being in specific locations in oilfield 200, it will be appreciated that one or more types of measurement may be taken at one or more locations across one or more fields or other locations for comparison and/or analysis.

The data collected from various sources, such as the data acquisition tools of Figure 2, may then be processed and/or evaluated. Typically, seismic data displayed in static data plot 208a from data acquisition tool 202a is used by a geophysicist to determine characteristics of the subterranean formations and features. The core data shown in static plot 208b and/or log data from well log 208c are typically used by a geologist to determine various characteristics of the subterranean formation. The production data from graph 208d is typically used by the reservoir engineer to determine fluid flow reservoir characteristics. The data analyzed by the geologist, geophysicist and the reservoir engineer may be analyzed using modeling techniques.

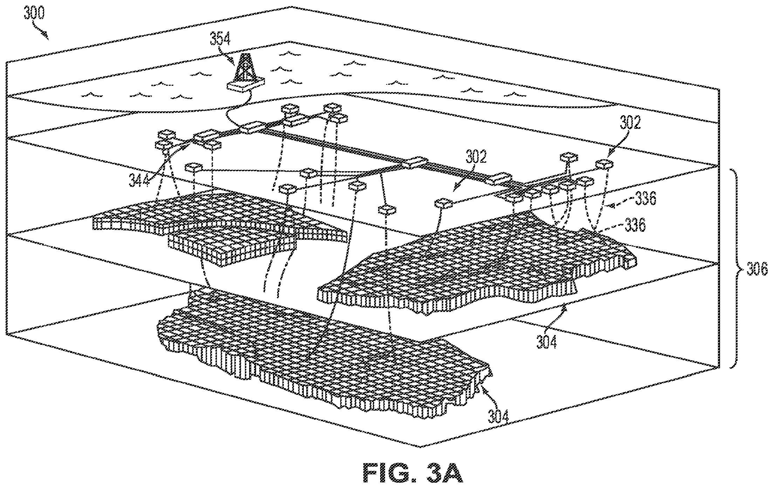

Figure 3A illustrates an oilfield 300 for performing production operations in accordance with implementations of various technologies and techniques described herein. As shown, the oilfield has a plurality of wellsites 302 operatively connected to central processing facility 354. The oilfield configuration of Figure 3A is not intended to limit the scope of the oilfield application system. Part, or all, of the oilfield may be on land and/or sea. Also, while a single oilfield with a single processing facility and a plurality of wellsites is depicted, any combination of one or more oilfields, one or more processing facilities and one or more wellsites may be present.

Each wellsite 302 has equipment that forms wellbore 336 into the earth. The wellbores extend through subterranean formations 306 including reservoirs 304. These reservoirs 304 contain fluids, such as hydrocarbons. The wellsites draw fluid from the reservoirs and pass them to the processing facilities via surface networks 344. The surface networks 344 have tubing and control mechanisms for controlling the flow of fluids from the wellsite to processing facility 354.

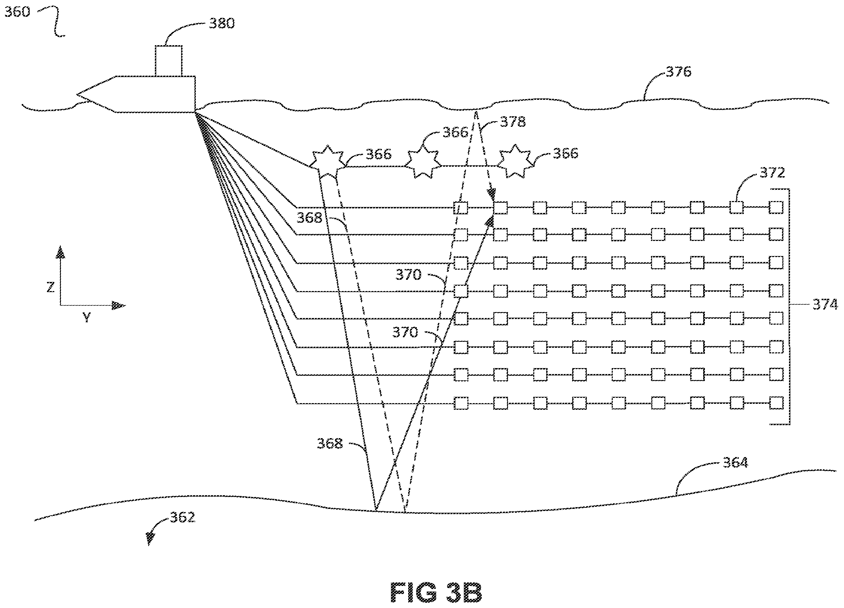

Attention is now directed to Figure 3B, which illustrates a side view of a marine-based survey 360 of a subterranean subsurface 362 in accordance with one or more implementations of various techniques described herein. Subsurface 362 includes seafloor surface 364. Seismic sources 366 may include marine sources such as vibroseis or airguns, which may propagate seismic waves 368 (e.g., energy signals) into the Earth over an extended period of time or at a nearly instantaneous energy provided by impulsive sources. The seismic waves may be propagated by marine sources as a frequency sweep signal. For example, marine sources of the vibroseis type may initially emit a seismic wave at a low frequency (e.g., 5 Hz) and increase the seismic wave to a high frequency (e.g., 80-90Hz) over time.

The component(s) of the seismic waves 368 may be reflected and converted by seafloor surface 364 (i.e., reflector), and seismic wave reflections 370 may be received by a plurality of seismic receivers 372. Seismic receivers 372 may be disposed on a plurality of streamers (i.e., streamer array 374). The seismic receivers 372 may generate electrical signals representative of the received seismic wave reflections 370. The electrical signals may be embedded with information regarding the subsurface 362 and captured as a record of seismic data.

In one implementation, each streamer may include streamer steering devices such as a bird, a deflector, a tail buoy and the like, which are not illustrated in this application. The streamer steering devices may be used to control the position of the streamers in accordance with the techniques described herein.

In one implementation, seismic wave reflections 370 may travel upward and reach the water/air interface at the water surface 376, a portion of reflections 370 may then reflect downward again (i.e., sea-surface ghost waves 378) and be received by the plurality of seismic receivers 372. The sea-surface ghost waves 378 may be referred to as surface multiples. The point on the water surface 376 at which the wave is reflected downward is generally referred to as the downward reflection point.

The electrical signals may be transmitted to a vessel 380 via transmission cables, wireless communication or the like. The vessel 380 may then transmit the electrical signals to a data processing center. Alternatively, the vessel 380 may include an onboard computer capable of processing the electrical signals (i.e., seismic data). Those skilled in the art having the benefit of this disclosure will appreciate that this illustration is highly idealized. For instance, surveys may be of formations deep beneath the surface. The formations may typically include multiple reflectors, some of which may include dipping events, and may generate multiple reflections (including wave conversion) for receipt by the seismic receivers 372. In one implementation, the seismic data may be processed to generate a seismic image of the subsurface 362.

Marine seismic acquisition systems tow each streamer in streamer array 374 at the same depth (e.g., 5-10m). However, marine based survey 360 may tow each streamer in streamer array 374 at different depths such that seismic data may be acquired and processed in a manner that avoids the effects of destructive interference due to sea-surface ghost waves. For instance, marine-based survey 360 of Figure 3B illustrates eight streamers towed by vessel 380 at eight different depths. The depth of each streamer may be controlled and maintained using the birds disposed on each streamer.

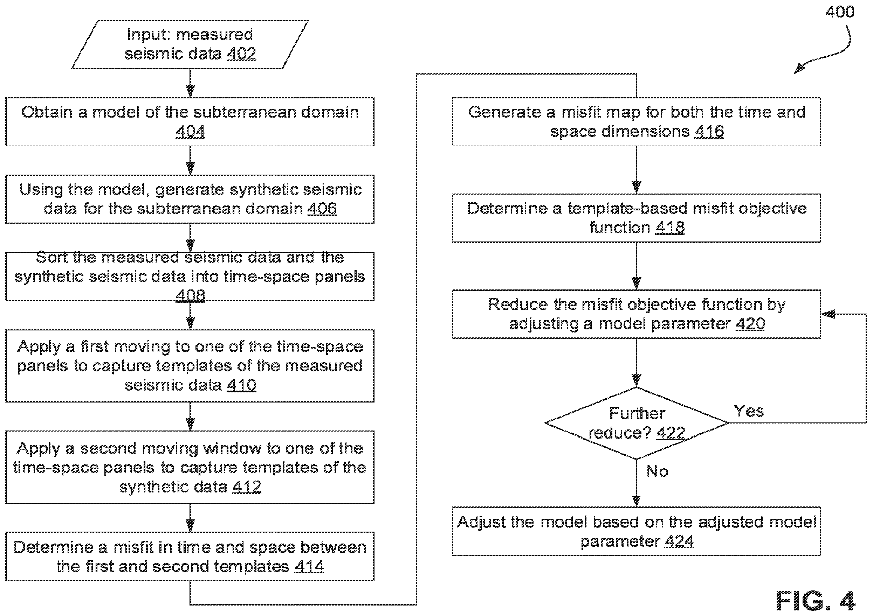

Figure 4 illustrates a flowchart of a method 400 for seismic processing (e.g., seismic imaging of a subterranean domain), according to an embodiment. As mentioned above, embodiments of the present method 400 may employ full-waveform inversion (FWI). Further, at least some embodiments may perform FWI without directly comparing the amplitudes of the synthetic data to the measured data.

In the illustrated embodiment, the method 400 may include receiving, as input, measured seismic data, as at 402. The measured seismic data may be acquired using seismic receivers in an array or in streamers, as mentioned above. The recordings of the receivers may represent arrivals of seismic waves that have propagated at least partially through a subterranean domain of interest. The measured seismic data may thus be employed, through inversion, to determine structure, geology, etc., of the subterranean domain.

The method 400 may also include obtaining an initial model of the subterranean domain, as at 404. The initial model may be generated as part of the method 400 or may be acquired from proprietary or publicly available databases, or from information derived from such sources. The method 400 may, among other things, improve the accuracy of the initial model using the measured seismic data.

The method 400 may then proceed to using the model to generate synthetic seismic data for the subterranean domain, as at 406. A variety of methods for generating synthetic waveforms may be applied consistent with the method 400, taking into consideration the initial model of the structure, geology, etc. of the subterranean domain.

The method 400 may then proceed to sorting the measured seismic data and the synthetic seismic data into time-space panels, as at 408. For example, the data may be organized in separate panels for each cable direction (e.g., cross-line or inline), resulting in two-dimensional panels (one for time and one for the spatial dimension). In another embodiment, the data may be organized in one panel for two spatial directions, e.g., resulting in three-dimensional panels. Further, the measured seismic data may be in one or more panels that are separate from one or more panels containing the synthetic seismic data.

The method 400 may further include applying moving windows in the panels to measure similarity between the measured and synthetic seismic data. In particular, the data captured in the windows may be used to define templates for the data, which may then be matched together to determine offset (in both time and space). For example, the method 400 may include applying a first moving window to one of the time-space panels to capture a first template of the measured seismic data in the window, as at 410. The method 400 may also include applying a second moving window to one of the space-time panels to capture a second template of the synthetic data in the window, as at 412. In this context a "template" refers to the appearance of the data in the window, as a whole (e.g., its shape).

The size of the first and second moving windows may be consistent with one another, as the templates captured therein may be compared for misfit determination, as will be explained in greater detail below. The size of the windows may be selected based on a variety of factors. For example, the window size may be determined based on a dominant frequency of the seismic data. In this context, dominant frequency refers to the peak or center frequency of the seismic data used in the inversion.

The templates within the first moving window thus represent the template for the measured seismic data, while the templates within the second moving window represent the template for the synthetic (modeled) seismic data. The method 400 may then compare the templates captured in these moving windows to determine a misfit in time and space between the templates, as at 414.

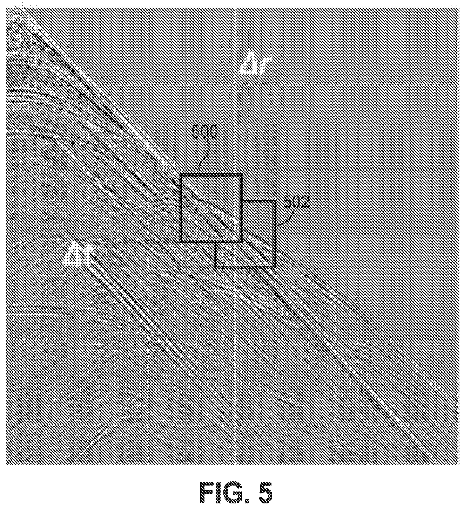

Referring additionally to Figure 5, there is shown an example of a two-dimensional panel representing time on a vertical axis and one direction in space on a horizontal axis. This panel illustrates both synthetic and measured seismic data together for purposes of illustrating a time and space shift between the two datasets, although in some embodiments, the measured and synthetic data may be in separate panels. As shown, the panel includes a first window 500 and a second window 502. The synthetic data in the first window 500 corresponds (fits with) the seismic data in the second window 502.

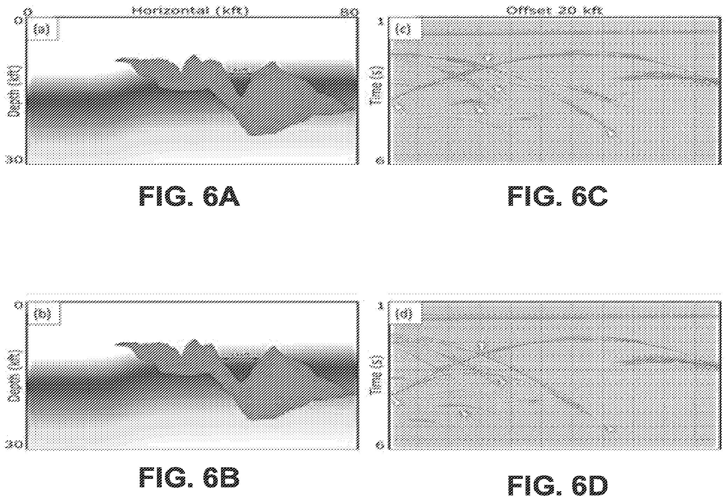

However, the windows are located in different positions in the time-space panel. Accordingly, values for misfit, describing the shift in time (Δt) and space (Δr) to accomplish a close fit may be determined. Further, Figures 6A-6D illustrate a complex shift of a top of salt reflection events resulting from the uncertain ty of the salt location.

Referring again to Figure 4, the method 400 of the invention determines misfit maps for both the time and space dimensions of the panel (e.g., a time-shift map and a space-shift map, or one map that combines the two), as at 416. Based on these maps, the method 400 then proceeds to determine a template-based misfit objective function, as at 418. The method 400 then proceeds to reduce the misfit objective function by adjusting a model parameter, as at 420. If the objective function is not sufficiently minimized (e.g., below a predetermined threshold), as determined at 422, the method 400 may iterate back and adjust the model parameter further, so as to further reduce the objective function at 420.

For example, a multiscale implementation of FWI may iteratively update model fields $m$ to reduce the misfit between the measured data d and the synthetic data $F(m)$, which can be formulated as

$$\min_{m} J(m) = \mathcal{L}[F(m), d], \tag{1}$$

where $\mathcal{L}$ is a function measuring the misfit between the simulation data and the observed data.

For the case of the traditional least-squares objective function, $\mathcal{L}_{ls}$ can be defined as:

$$\mathcal{L}_{ls}[F(m), d] = \frac{1}{2} \|F(m) - d\|_2^2, \tag{2}$$

where $\|\cdot\|_2^2$ stands for the squared L2 norm. For the case of a travel time based objective function, $\mathcal{L}_{tt}$ can be defined as:

$$\mathcal{L}_{tt}[F(m), d] = \frac{1}{2} c \|\Delta\tau\|_2^2, \tag{3}$$

where $\Delta\tau$ is the measured time shift between observed data and simulated data through a 1D temporal windowed cross-correlation for every sample along time axis. As noted above, the choice of the temporal window size will be selected according to the dominant frequency of the inversion frequency band. The variable c stands for the quality factor as a weight for the time shift measurement, could be derived from cross-correlation coefficient.

To extend the 1D temporal cross-correlation based time shift measurement to a 2D time-space template matching approach as discussed above, the time-space template matching based misfit $\mathcal{L}_{tm}$ can be defined as:

$$\mathcal{L}_{tm}[F(m), d] = \frac{1}{2} c(\|\Delta\tau\|_2^2 + \mu\|\Delta r\|_2^2), \tag{4}$$

where $\Delta\tau$ and $\Delta r$ is the measured time- and space-shift between observed data and simulated data through a 2D windowed time-space template matching calculation, respectively. The choice of the 2D time-space template may, again, be designed to capture the dominant frequency of the signal in time axis and representative character of the event moveout in spatial axis. $\mu$ is a tuning parameter which is designed not only to relate the space-shift to the scale of the time-shift but also as a weight to control the focus of the objective function between time-shift and space-shift.

FWI with a Time-Space Template Matching objective function utilizes the time-shift and space-shift as the misfit to derive the model update, and as such it avoids direct amplitude comparison as performed in conventional FWI. However, the measurement of the template match misfit may still rely on a degree of similarity existing between the simulated data and the observed data. If there is missing event in either of the data, a reliable measurement of the misfit may not be obtained.

Accordingly, the regions of the model updated through FWI may be relatively small, e.g., in the shallow region where most of the similar events occur. Embodiments of the present method may, however, employ an enhanced template matching objective function to further extend the template matching objective function with incorporating least-squares misfit as a contributing part for where no similarity between the simulate data and the observed data can be obtained, as:

$$\mathcal{L}_{etm}[F(m), d] = \frac{1}{2} [c(\|\Delta\tau\|_2^2 + \mu\|\Delta r\|_2^2) + \gamma(1 - c)\|F(m) - d\|_2^2], \tag{5}$$

where $\gamma$ is another tuning parameter which is designed not only to relate the least-squares misfit to the scale of the template matching misfit but also as a weight to control the focus of the objective function between temporal- and spatial-shift and a least-squares comparison.

The enhanced template matching objective function is minimized by iteratively updating the model parameter with a line-search method:

$$m_{k+1} = m_k + \alpha_k g_k , \qquad\qquad (6)$$

where $\alpha_k$ is the step size of the $k$-th iteration resolved from line search, and $g_k$ is the model updating direction at the $k$-th iteration, which is a descent direction based on the gradient computed to minimize the misfit function shown in equation (2). The inversion may be performed both iteratively from low to high frequencies and for each individual frequency band.

Accordingly, it will be observed that when there is a high degree of similarity between the measured (observed) data and simulated data, the inversion may be based on both temporal-shift and spatial-shift. This may allow use of an objective function that focuses on model kinematics, and is less sensitive to seismic amplitude.

In places with lower similarity, which may be observed as a missing event in the simulated data due to the smoothness of the model, a least-squares based objective function may be used to derive a model update. Instead of losing the capability to update the corresponding region in the model entirely as in traveltime based FWI, embodiments of the present disclosure may be able to push the model update to extend in depth.

Those parts of the model update driven by least-squares misfit may contribute to the template matching part of the misfit in the next FWI iteration. Over iterations, along with the improvements of the similarity between the simulated data and the observed data, the inversion may focus progressively more on a kinematic match rather than least-squares match.

When the objective function is minimized sufficiently and/or once a predetermined number of iterations of objective-function reduction is reached, the method 400 may proceed to adjusting the model based on the adjusted model parameter, as at 424. Further, the model may be visualized, e.g., on a computer display. Such a computer display of the enhanced, efficiently-created model may serve to enhance the field of seismic image processing by providing a more accurate visualization of the subterranean domain, which may facilitate oilfield exploration, drill planning, drilling, etc.

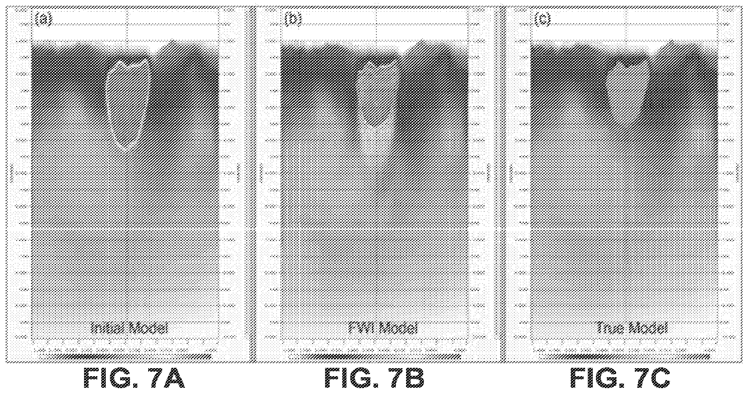

An experimental result for the present method is shown in Figures 7A, 7B, and 7C. In particular, Figure 7A illustrates a salt-body interpretation based on an initial model, Figure 7B illustrates the same interpretation using an embodiment of the present method, and Figure 7C illustrates the input or "true" model used for the simulation. As can be seen, the initial model has the wrong salt velocity and a large error in salt geometry. As a consequence, cycle-skipping was present with the least-squares objective function based FWI. By comparison, the results in Figure 7B show that the enhanced template matching function was able to update to the correct salt velocity inside the salt region, as well as increase the accuracy of the salt body geometry.

In one or more embodiments, the functions described can be implemented in hardware, software, firmware, or any combination thereof. For a software implementation, the techniques described herein can be implemented with modules (e.g., procedures, functions, subprograms, programs, routines, subroutines, modules, software packages, classes, and so on) that perform the functions described herein. A module can be coupled to another module or a hardware circuit by passing and/or receiving information, data, arguments, parameters, or memory contents. Information, arguments, parameters, data, or the like can be passed, forwarded, or transmitted using any suitable means including memory sharing, message passing, token passing, network transmission, and the like. The software codes can be stored in memory units and executed by processors. The memory unit can be implemented within the processor or external to the processor, in which case it can be communicatively coupled to the processor via various means as is known in the art.

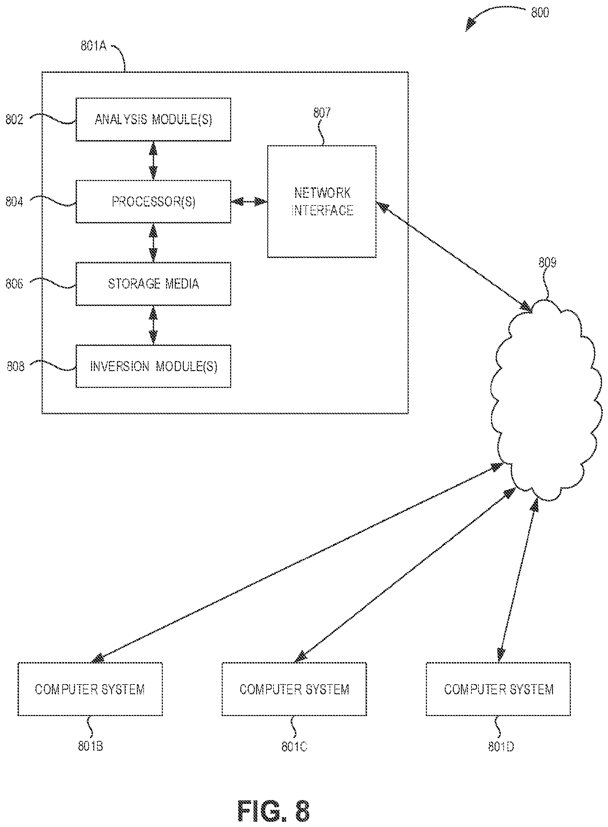

In some embodiments, any of the methods of the present disclosure may be executed by a computing system. Figure 8 illustrates an example of such a computing system 800, in accordance with some embodiments. The computing system 800 may include a computer or computer system 801A, which may be an individual computer system 801A or an arrangement of distributed computer systems. The computer system 801A includes one or more analysis module(s) 802 configured to perform various tasks according to some embodiments, such as one or more methods disclosed herein. To perform these various tasks, the analysis module 802 executes independently, or in coordination with, one or more processors 804, which is (or are) connected to one or more storage media 806. The processor(s) 804 is (or are) also connected to a network interface 807 to allow the computer system 801A to communicate over a data network 809 with one or more additional computer systems and/or computing systems, such as 801B, 801C, and/or 801D (note that computer systems 801B, 801C and/or 801D may or may not share the same architecture as computer system 801A, and may be located in different physical locations, e.g., computer systems 801A and 801B may be located in a processing facility, while in communication with one or more computer systems such as 801C and/or 801D that are located in one or more data centers, and/or located in varying countries on different continents).

A processor can include a microprocessor, microcontroller, processor module or subsystem, programmable integrated circuit, programmable gate array, or another control or computing device.

The storage media 806 can be implemented as one or more computer-readable or machine-readable storage media. Note that while in the example embodiment of Figure 8 storage media 806 is depicted as within computer system 801A, in some embodiments, storage media 806 may be distributed within and/or across multiple internal and/or external enclosures of computing system 801A and/or additional computing systems. Storage media 806 may include one or more different forms of memory including semiconductor memory devices such as dynamic or static random access memories (DRAMs or SRAMs), erasable and programmable read-only memories (EPROMs), electrically erasable and programmable read-only memories (EEPROMs) and flash memories, magnetic disks such as fixed, floppy and removable disks, other magnetic media including tape, optical media such as compact disks (CDs) or digital video disks (DVDs), BLURAY® disks, or other types of optical storage, or other types of storage devices. Note that the instructions discussed above can be provided on one computer-readable or machine-readable storage medium, or alternatively, can be provided on multiple computer-readable or machine-readable storage media distributed in a large system having possibly plural nodes. Such computer-readable or machine-readable storage medium or media is (are) considered to be part of an article (or article of manufacture). An article or article of manufacture can refer to any manufactured single component or multiple components. The storage medium or media can be located either in the machine running the machine-readable instructions, or located at a remote site from which machine-readable instructions can be downloaded over a network for execution.

In some embodiments, computing system 800 contains one or more inversion module(s) 808. In the example of computing system 800, computer system 801A includes the inversion module 808. In some embodiments, a single inversion module may be used to perform some or all aspects of one or more embodiments of the methods. In alternate embodiments, a plurality of inversion modules may be used to perform some or all aspects of methods.

It should be appreciated that computing system 800 is only one example of a computing system, and that computing system 800 may have more or fewer components than shown, may combine additional components not depicted in the example embodiment of Figure 8, and/or computing system 800 may have a different configuration or arrangement of the components depicted in Figure 8. The various components shown in Figure 8 may be implemented in hardware, software, or a combination of both hardware and software, including one or more signal processing and/or application specific integrated circuits.

Further, the steps in the processing methods described herein may be implemented by running one or more functional modules in information processing apparatus such as general purpose processors or application specific chips, such as ASICs, FPGAs, PLDs, or other appropriate devices. These modules, combinations of these modules, and/or their combination with general hardware are all included within the scope of protection of the invention.

Geologic interpretations, models and/or other interpretation aids may be refined in an iterative fashion; this concept is applicable to embodiments of the present methods discussed herein. This can include use of feedback loops executed on an algorithmic basis, such as at a computing device (e.g., computing system 800, Figure 8), and/or through manual control by a user who may make determinations regarding whether a given step, action, template, model, or set of curves has become sufficiently accurate for the evaluation of the subsurface three-dimensional geologic formation under consideration.

The foregoing description, for purpose of explanation, has been described with reference to specific embodiments. However, the illustrative discussions above are not intended to be exhaustive or to limit the invention to the precise forms disclosed. Many modifications and variations are possible in view of the above teachings. Moreover, the order in which the elements of the methods are illustrated and described may be re-arranged, and/or two or more elements may occur simultaneously. The embodiments were chosen and described in order to best explain the principals of the invention and its practical applications, to thereby enable others skilled in the art to best utilize the invention and various embodiments with various modifications as are suited to the particular use contemplated.

**Claims**

1. A method (400) for seismic processing, comprising:

   receiving (402) measured seismic data collected by recording seismic waves that propagate through a subterranean domain;
   simulating (406) synthetic seismic data using a model of the subterranean domain;
   generating (408) a first time-space panel including the measured seismic data and a second time-space panel including the synthetic seismic data;
   applying (410, 412) a first moving window to the first time-space panel and a second moving window to the second time-space panel;
   determining (414) a misfit by comparing the measured seismic data in the first moving window with the synthetic seismic data in the second moving window; and adjusting (420, 424) the model based on the misfit;
   **characterised in that** determining (414) the misfit comprises:

calculating a time-shift map and a space-shift map using the first and second moving windows;

calculating (418) a template-matching-based misfit objective function based on both the time-shift map and the space-shift map; and

iteratively reducing (420, 422) the template-matching-based misfit objective function by adjusting a parameter of the model.

2. The method (400) of claim 1, further comprising sorting (408) the measured seismic data and the synthetic seismic data along an individual spatial direction, such that the first and second time-space panels are both two-dimensional.

3. The method (400) of claim 1, further comprising sorting (408) the measured seismic data and the synthetic seismic data along two spatial directions, such that the first and second time-space panels are both three-dimensional.

4. The method (400) of claim 1, further comprising:

determining a dominant frequency of the measured seismic data; and
selecting a size for the first and second moving windows based on the dominant frequency.

5. The method (400) of claim 1, wherein the template-matching-based misfit objective function does not directly compare amplitudes of the measured seismic data with amplitudes of the synthetic seismic data.

6. The method (400) of claim 1, wherein the template-matching-based misfit objective function includes a least-squares misfit term for areas where there is no similarity between the synthetic seismic data and the measured seismic data.

7. A non-transitory computer-readable medium (806) storing instructions that, when executed by at least one processor (804) of a computing system (801), cause the computing system to perform operations, the operations comprising the steps of the method (400) of any preceding claim.

8. A computing system (801), comprising:

one or more processors (804); and
a memory system including one or more non-transitory computer-readable media (806) storing instructions that, when executed by at least one of the one or more processors (804), cause the computing system (801) to perform operations, the operations comprising the steps of the method (400) of any of claims 1 to 6.

**Patentansprüche**

1. Verfahren (400) zum seismischen Verarbeiten, umfassend:

Empfangen (402) von gemessenen seismischen Daten, die durch Aufzeichnen seismischer Wellen gesammelt werden, die sich durch ein unterirdisches Gebiet ausbreiten;

Simulieren (406) synthetischer seismischer Daten unter Verwendung eines Modells des unterirdischen Gebiets;

Erzeugen (408) eines ersten Zeit-Raum-Schaubilds, das die gemessenen seismischen Daten umfasst, und eines zweiten Zeit-Raum-Schaubilds, das die synthetischen seismischen Daten umfasst;

Auflegen (410, 412) eines ersten sich bewegenden Fensters auf das erste Zeit-Raum-Schaubild und eines zweiten gleitenden Fensters auf das zweite Zeit-Raum-Schaubild;

Bestimmen (414) einer Fehlanpassung durch Vergleichen der gemessenen seismischen Daten in dem ersten sich bewegenden Fenster mit den synthetischen seismischen Daten in dem zweiten sich bewegenden Fenster; und

Anpassen (420, 424) des Modells basierend auf der Fehlanpassung;

**dadurch gekennzeichnet, dass** das Bestimmen (414) der Fehlanpassung umfasst:

Berechnen einer Zeitverschiebungskarte und einer Raumverschiebungskarte unter Verwendung des ersten und des zweiten sich bewegenden Fensters;

Berechnen (418) einer auf Schablonenanpassung basierenden Fehlanpassungs-Zielfunktion basierend sowohl auf der Zeitverschiebungskarte als auch auf der Raumverschiebungskarte; und

iteratives Reduzieren (420, 422) der auf Schablonenanpassung basierenden Fehlanpassungs-Zielfunktion durch Anpassen eines Parameters des Modells.

**2.** Verfahren (400) nach Anspruch 1, ferner umfassend das Sortieren (408) der gemessenen seismischen Daten und der synthetischen seismischen Daten entlang einer individuellen räumlichen Richtung, derart, dass das erste und das zweite Zeit-Raum-Schaubild beide zweidimensional sind.

**3.** Verfahren (400) nach Anspruch 1, ferner umfassend das Sortieren (408) der gemessenen seismischen Daten und der synthetischen seismischen Daten entlang zweier räumlicher Richtungen, derart, dass das erste und das zweite Zeit-Raum-Schaubild beide dreidimensional sind.

**4.** Verfahren (400) nach Anspruch 1, ferner umfassend:

Bestimmen einer dominanten Frequenz der gemessenen seismischen Daten; und
Auswählen einer Größe für das erste und das zweite sich bewegende Fenster basierend auf der dominanten Frequenz.

**5.** Verfahren (400) nach Anspruch 1, wobei die auf Schablonenanpassung basierende Fehlanpassungs-Zielfunktion nicht direkt Amplituden der gemessenen seismischen Daten mit Amplituden der synthetischen seismischen Daten vergleicht.

**6.** Verfahren (400) nach Anspruch 1, wobei die auf Schablonenanpassung basierende Fehlanpassungs-Zielfunktion einen Kleinste-Quadrate-Fehlanpassungs-Bedingung für Bereiche einschließt, in denen es keine Ähnlichkeit zwischen den synthetischen seismischen Daten und den gemessenen seismischen Daten gibt.

**7.** Nichtflüchtiges computerlesbares Medium (806), das Anweisungen speichert, die, wenn sie durch mindestens einen Prozessor (804) eines Rechensystems (801) ausgeführt werden, das Rechensystem veranlassen, Abläufe durchzuführen, die Abläufe umfassend die Schritte des Verfahrens (400) nach einem der vorstehenden Ansprüche.

**8.** Computersystem (801), umfassend:

einen oder mehrere Prozessoren (804); und
ein Speichersystem, einschließlich eines oder mehrerer nichtflüchtiger computerlesbarer Medien (806), die Anweisungen speichern, die, wenn sie durch mindestens einen des einen oder der mehreren Prozessoren (804) ausgeführt werden, das Rechensystem (801) veranlassen, Abläufe durchzuführen, die Abläufe umfassend die Schritte des Verfahrens (400) nach einem der Ansprüche 1 bis 6.

**Revendications**

**1.** Procédé (400) permettant un traitement sismique, comprenant :

la réception (402) de données sismiques mesurées, collectées par un enregistrement d'ondes sismiques qui se propagent dans un domaine souterrain ;
la simulation (406) de données sismiques synthétiques à l'aide d'un modèle du domaine souterrain ;
la génération (408) d'un premier panneau spatio-temporel comportant les données sismiques mesurées et d'un second panneau spatio-temporel comportant les données sismiques synthétiques ;
l'application (410, 412) d'une première fenêtre mobile au premier panneau spatio-temporel et d'une seconde fenêtre mobile au second panneau spatio-temporel ;
la détermination (414) d'une inadéquation en comparant les données sismiques mesurées dans la première fenêtre mobile avec les données sismiques synthétiques dans la seconde fenêtre mobile ; et
l'ajustement (420, 424) du modèle sur la base de l'inadéquation ;
**caractérisé en ce que** la détermination (414) de l'inadéquation comprend :

le calcul d'une carte de décalage temporel et d'une carte de décalage spatial à l'aide des première et seconde fenêtres mobiles ;
le calcul (418) d'une fonction objective d'inadéquation basée sur la correspondance des modèles sur la base à la fois de la carte de décalage temporel et de la carte de décalage spatial ; et
la réduction itérative (420, 422) de la fonction objective d'inadéquation basée sur la correspondance des modèles en ajustant un paramètre du modèle.

2. Procédé (400) selon la revendication 1, comprenant en outre le tri (408) des données sismiques mesurées et des données sismiques synthétiques le long d'une direction spatiale individuelle, de telle sorte que les premier et second panneaux spatio-temporels sont tous deux bidimensionnels.

3. Procédé (400) selon la revendication 1, comprenant en outre le tri (408) des données sismiques mesurées et des données sismiques synthétiques le long de deux directions spatiales, de telle sorte que les premier et second panneaux spatio-temporels sont tous deux tridimensionnels.

4. Procédé (400) selon la revendication 1, comprenant en outre :

la détermination d'une fréquence dominante des données sismiques mesurées ; et
la sélection d'une taille pour les première et seconde fenêtres mobiles sur la base de la fréquence dominante.

5. Procédé (400) selon la revendication 1, dans lequel la fonction objective d'inadéquation basée sur la correspondance des modèles ne compare pas directement des amplitudes des données sismiques mesurées avec des amplitudes des données sismiques synthétiques.

6. Procédé (400) selon la revendication 1, dans lequel la fonction objective d'inadéquation basée sur la correspondance des modèles comporte un terme d'inadéquation des moindres carrés pour des zones où il n'existe pas de similitude entre les données sismiques synthétiques et les données sismiques mesurées.

7. Support non transitoire lisible par ordinateur (806) stockant des instructions qui, lorsqu'elles sont exécutées par au moins un processeur (804) d'un système informatique (801), amènent le système informatique à réaliser des opérations, les opérations comprenant les étapes du procédé (400) selon l'une quelconque revendication précédente.

8. Système informatique (801), comprenant :

un ou plusieurs processeurs (804) ; et
un système de mémoire comportant un ou plusieurs supports non transitoires lisibles par ordinateur (806) stockant des instructions qui, lorsqu'elles sont exécutées par au moins l'un parmi le ou les processeurs (804), amènent le système informatique (801) à réaliser des opérations, les opérations comprenant les étapes du procédé (400) selon l'une quelconque des revendications 1 à 6.

FIG. 1A

FIG. 1B

FIG. 1C

FIG. 1D

FIG 2

FIG. 3A

**FIG 3B**

EP 4 111 239 B1

```
         ┌────────────────────────┐
        /  Input: measured       /
       /  seismic data 402      /
      └────────────────────────┘
                 │
                 ▼
  ┌─────────────────────────────────────┐        ┌─────────────────────────────────────┐
  │ Obtain a model of the subterranean  │        │ Generate a misfit map for both the  │
  │ domain 404                          │        │ time and space dimensions 416       │
  └─────────────────────────────────────┘        └─────────────────────────────────────┘
                 │                                              │
                 ▼                                              ▼
  ┌─────────────────────────────────────┐        ┌─────────────────────────────────────┐
  │ Using the model, generate synthetic │        │ Determine a template-based misfit   │
  │ seismic data for the subterranean   │        │ objective function 418              │
  │ domain 406                          │        └─────────────────────────────────────┘
  └─────────────────────────────────────┘                      │
                 │                                              ▼
                 ▼                                 ┌─────────────────────────────────────┐
  ┌─────────────────────────────────────┐        │ Reduce the misfit objective          │
  │ Sort the measured seismic data and  │        │ function by adjusting a model         │
  │ the synthetic seismic data into     │        │ parameter 420                        │
  │ time-space panels 408               │        └─────────────────────────────────────┘
  └─────────────────────────────────────┘                      │
                 │                                              ▼
                 ▼                                       ◇ Further      ◇  Yes
  ┌─────────────────────────────────────┐              ◇ reduce? 422  ◇ ────►
  │ Apply a first moving to one of the  │                      │
  │ time-space panels to capture        │                      │ No
  │ templates of the measured seismic   │                      ▼
  │ data 410                            │        ┌─────────────────────────────────────┐
  └─────────────────────────────────────┘        │ Adjust the model based on the        │
                 │                                │ adjusted model parameter 424         │
                 ▼                                └─────────────────────────────────────┘
  ┌─────────────────────────────────────┐
  │ Apply a second moving window to one │
  │ of the time-space panels to capture │
  │ templates of the synthetic data 412 │
  └─────────────────────────────────────┘
                 │
                 ▼
  ┌─────────────────────────────────────┐
  │ Determine a misfit in time and space│
  │ between the first and second        │
  │ templates 414                       │
  └─────────────────────────────────────┘
```

400

FIG. 4

FIG. 5

FIG. 6A

FIG. 6B

FIG. 6C

FIG. 6D

FIG. 7A      FIG. 7B      FIG. 7C

**FIG. 8**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 62982318
- US 5706194 A